# EUROPÄISCHE PATENTSCHRIFT

(11) **EP 0 589 247 B1**
(45) Veröffentlichungstag und Bekanntmachung des Hinweises auf die Patenterteilung: **17.03.1999**
(21) Anmeldenummer: 93113960.4
(22) Anmeldetag: 31.08.1993
(51) Int. Cl.: H04J 3/06

(54) **Verfahren zum Synchronisieren eines Übertragungssystems**
Synchronisation method for a transmission system
Méthode de synchronisation d'un système de transmission

(30) Priorität: 25.09.1992 DE 4232270
(43) Veröffentlichungstag der Anmeldung: 30.03.1994
(73) Patentinhaber: SIEMENS AKTIENGESELLSCHAFT, 80333 München (DE)
(72) Erfinder: Singer, Johannes, Dipl.-Ing., D-82110 Germering (DE)

(56) Entgegenhaltungen:
- CA-A- 121 977
- DE-A- 2 811 851
- DE-A- 3 215 448
- US-A- 4 611 336

## Beschreibung

Die Erfindung betrifft ein Verfahren zum Synchronisieren eines Übertragungssystems gemäß Oberbegriff des Patentanspruches 1.

Es ist bereits ein Verfahren zum Übertragen von Datensignalen in Form von aufeinanderfolgenden Bitgruppen bekannt ("telcom report", 2 (1979), Beiheft "Digital-Übertragungstechnik", Seiten 155 bis 159). Bei diesem bekannten Verfahren werden in Teilnehmeranschlußgeräten aus mit einer festgelegten Übertragungsbitrate auftretenden Datensignalen als Envelopes bezeichnete Bitgruppen gebildet, welche jeweils aus einer festgelegten Anzahl von Datenbits, beispielsweise 8 Datenbits, sowie zwei Zusatzbits gebildet sind. Durch ein erstes dieser Zusatzbits, das auch als Statusbit bezeichnet wird, ist dabei bei Wählverbindungen angezeigt, ob es sich bei den in der jeweiligen Bitgruppe enthaltenen Datensignalen um den Verbindungsaufbau bzw. Verbindungsabbau dienende Signalisierungsinformationen oder um Datensignale handelt, die im Zuge einer bestehenden Verbindung zu übertragen sind. Das verbleibende zweite, auch als Alignmentbit bezeichnete Zusatzbit dient dagegen für die Übertragung von Synchronisierinformationen.

Darüber hinaus ist im Zusammenhang mit einem aus zwei über eine Übertragungsstrecke miteinander verbundenen Zeitmultiplexeinrichtungen bestehenden Zeitmultiplexsystem ein Verfahren zur Rahmensynchronisierung bekannt (DE-AS 28 11 851). Bei diesem Verfahren werden pro Zeitmultiplexrahmen m Zeitschlitze bereitgestellt, wobei in einem solchen Zeitmultiplexrahmen m-1 Datenbits und ein Synchronisierbit enthalten sind. p 6 einanderfolgende Synchronisierbits bilden dabei ein Synchronisierwort. Vor Erreichen eines synchronen Zustandes wird ein Synchronisieralarm angezeigt und nach zwei aufeinanderfolgenden Synchronisierworten der Beginn einer Prüfzeit festgelegt, deren Dauer ein Vielfaches von p Zeitmultiplexrahmen beträgt. Falls während der Prüfzeit fortlaufend Synchronisierworte empfangen werden, wird der Synchronisieralarm abgeschaltet. Wird jedoch ein einziges Synchronisierwort nicht erkannt, bleibt der Synchronisieralarm bestehen. Ausgehend vom synchronen Zustand wird Synchronisieralarm gegeben, falls mehrere Synchronisierworte nicht erkannt werden.

Bei Auftreten des festgelegten Synchronisierwortes in zwei unterschiedlichen Zeitschlitzen wird nach Erkennen zweier aufeinanderfolgender Synchronisierworte der Beginn der zuvor genannten Prüfzeit festgelegt. Während der Prüfzeit wird laufend überprüft, ob in zwei verschiedenen Zeitschlitzen Synchronisierworte empfangen werden und falls dies der Fall ist, bleibt der Synchronisieralarm bestehen. Nach einer vorgegebenen Dauer des Synchronisieralarms werden anstelle der Datenbits sendeseitiger Datenquellen Binärsignale vorgegebener Binärwerte gesendet. Nach erfolgter Rahmensynchronisierung werden dann wieder die Datenbits der sendeseitigen Datenquellen gesendet. Dabei ist bei dem bekannten Verfahren nicht angegeben, wie der in der empfangsseitigen Multiplexeinrichtung angezeigte Synchronisieralarm zu der sendeseitigen Multiplexeinrichtung hin übertragen wird, um in dieser die Abgabe der festgelegten Binärsignale nach dem Auftreten von Synchronisierworten in zwei unterschiedlichen Zeitschlitzen zu steuern.

Es ist nun Aufgabe der vorliegenden Erfindung, einen Weg zu zeigen, wie ein Verfahren der eingangs genannten Art ausgebildet werden kann, um eine Synchronisierung des Übertragungssystems auch bei einem sporadischen Auftreten von der Synchronisierbitfolge entsprechenden Bitmustern in den für die Übertragung von Datensignalen vorgesehenen Bitstellen aufeinanderfolgender Bitgruppen sicherzustellen, ohne daß auf die Sendeeinrichtung bei der Abgabe von Datensignalen eingewirkt werden muß.

Gelöst wird diese Aufgabe durch die im Patentanspruch 1 angegebenen Verfahrensmerkmale.

Der Vorteil besteht dabei darin, daß durch die gleichzeitige Überwachung sämtlicher Bitspuren und eine damit verbundenen Ermittlung der Anzahl der in den einzelnen Bitspuren auftretenden Synchronisierbitfolgen eine Synchronisierung des Übertragungssystems ohne Unterbrechung der Übertragung von Datensignalen in den einzelnen Bitgruppen durch die Sendeeinrichtung durchgeführt werden kann. Darüber hinaus ist das sporadische Auftreten von der Synchronisierbitfolge entsprechenden Bitmustern in den einzelnen, für die Übertragung von Datensignalen vorgesehenen Bitspuren in einfacher Weise erkennbar, so daß ein fehlerhaftes Synchronisieren des Übertragungssystems auf eine dieser Bitspuren vermieden wird.

Vorteilhafte Ausgestaltungen der Erfindung ergeben sich aus den Patentansprüchen 2 bis 5.

Im folgenden wird nun die vorliegende Erfindung anhand einer Zeichnung beispielsweise näher erläutert.

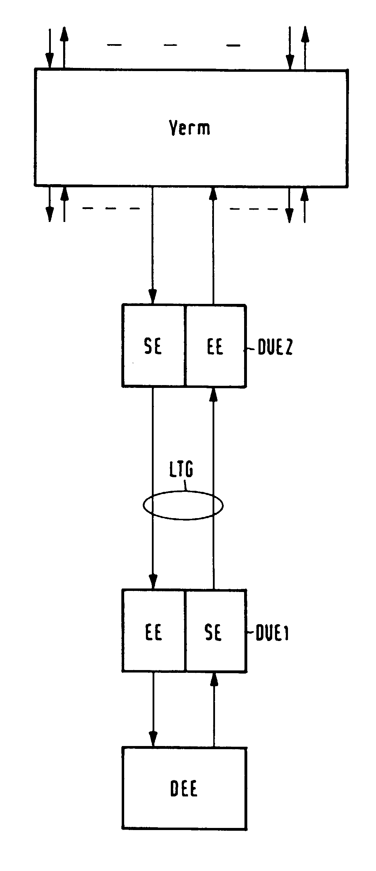

In der Zeichnung ist ein Übertragungssystem schematisch dargestellt, welches aus zwei beispielsweise über ein Leitungssystem LTG verbundenen Datenübertragungseinrichtungen DUE1 und DUE2 gebildet ist. An die Datenübertragungseinrichtung DUE1 möge dabei eine Datenendeinrichtung DEE angeschlossen sein, welche beispielsweise im Duplexbetrieb Datensignale aufzunehmen und abzugeben vermag. Die zweite Datenübertragungseinrichtung DUE2 möge dagegen mit einer für einen Duplexbetrieb ausgelegten Vermittlungseinrichtung Verm verbunden bzw. Bestandteil einer derartigen Vermittlungseinrichtung sein. Alternativ dazu kann an dieser Datenübertragungseinrichtung auch eine der Datenendeinrichtung DEE entsprechende Datenendeinrichtung angeschlossen sein.

Die Datenübertragungseinrichtungen DUE1 und DUE2 weisen jeweils eine Sendeeinrichtung SE und eine Empfangseinrichtung EE auf. Die Sendeeinrichtung der jeweiligen Datenübertragungseinrichtung fügt dabei die von der Datenendeinrichtung DEE bzw. von der Vermittlungseinrichtung Verm her aufgenommenen Datensignale in über das Leitungssystem LTG zu übertragende Bitgruppen ein. Die Empfangseinrichtung EE der jeweiligen Datenübertragungseinrichtung leitet dagegen in über das Leitungssystem übertragenen Bitgruppen enthaltene Datensignale an die Datenendeinrichtung bzw. die Vermittlungseinrichtung weiter. Die von den Datenübertragungseinrichtungen gebildeten bzw. aufgelösten Bitgruppen sind bei dem vorliegenden Ausführungsbeispiel jeweils aus einer festgelegten Anzahl von Datenbits, beispielsweise 8 Datenbits, sowie aus zwei Zusatzbits in Form eines Alignmentbits und eines Statusbit gebildet. Derartige Bitgruppen werden, wie bereits in der eingangs genannten Druckschrift "telcom report" ausgeführt, auch als Envelopes bezeichnet. Durch die Alignmentbits aufeinanderfolgender Bitgruppen ist dabei eine Synchronisierbitfolge festgelegt, die beispielsweise aus einer ständigen 0,1-Folge besteht. Mit Hilfe dieser als Synchronisierbits dienenden Alignmentbits sind jedoch auch beliebige andere Synchronisierbitfolgen festlegbar, deren einzelne Synchronisierbits äquidistant innerhalb eines Signalstromes verteilt sind.

In diesem Zusammenhang sei darauf hingewiesen, daß unter Datensignalen auch Textsignale sowie digital codierte Video- und Sprachsignale zu verstehen sind. Darüber hinaus können die Bitgruppen zwischen den beiden Datenübertragungseinrichtungen DUE1 und DUE2 in binärer Form oder mit einer davon abweichenden Codierung übertragen werden. Weiterhin kann die Übertragung der Bitgruppen auch durch eine Modulation eines festgelegten Trägers erfolgen.

Für die Synchronisierung der beiden Datenübertragungseinrichtungen DUE1 und DUE2 überprüft die jeweilige Empfangseinrichtung EE innerhalb des Signalstromes, der über das Leitungssystem LTG zugeführt ist, das Auftreten der zuvor genannten Synchronisierbitfolge. Hierzu wertet die jeweilige Empfangseinrichtung sämtliche, bei dem Ausführungsbeispiel möglichen 10 Bitspuren (Zeitschlitze), die durch einander entsprechende Bitstellen aufeinanderfolgender Bitgruppen gebildet sind, gesondert aus. Hierfür ist in der jeweiligen Empfangseinrichtung EE eine von den Bitgruppen zu durchlaufende Schieberegisteranordnung vorgesehen, welche über eine der Anzahl der zu einer Bitgruppe gehörenden Bits, bei dem angenommenen Beispiel also 10 Bits, entsprechende Anzahl von Registerzellen verfügt. An parallele Ausgänge dieser Registerzellen ist jeweils eine gesonderte Vergleicheranordnung angeschlossen. Die Vergleicheranordnungen werden dabei lediglich in einem dem Abstand zweier aufeinanderfolgender Bitgruppen entsprechenden zeitlichen Abstand aktiviert, so daß jede dieser Vergleicheranordnungen einer der zuvor genannten Bitspuren zugeordnet ist. Die jeweilige Vergleicheranordnung überwacht demzufolge das Auftreten der vorgegebenen Synchronisierbitfolge in der jeweiligen Bitspur. Dabei können die einzelnen Vergleicheranordnungen derart ausgelegt sein, daß durch diese jeweils die Synchronisierbitfolge in beliebigen Phasenlagen erkannt wird. Eine dafür geeignete Vereicheranordnung ist beispielsweise in der DE-OS 38 06 429 beschrieben. Darüber hinaus verfügen die Vergleicheranordnungen jeweils über eine Zähleranordnung, welche in periodisch wiederholt auftretenden, festgelegten Zeitintervallen jeweils die Anzahl der in der jeweiligen Bitspur erkannten Synchronisierbitfolgen ermittelt und entsprechende Angaben in Form eines Zählerstandes bereitstellt. Die von den einzelnen Zähleranordnungen gelieferten Angaben werden anschließend durch eine Auswerteeinrichtung dahingehend ausgewertet, daß diejenige Bitspur als Synchronisierspur angezeigt wird, in welcher in dem jeweiligen Zeitintervall die höchste Anzahl an Synchronisierbitfolgen aufgetreten ist. Die für die Zähleranordnungen festgelegten Zeitintervalle entsprechen dabei bei dem vorliegenden Ausführungsbeispiel der Dauer einer festgelegten Anzahl von 0,1-Wechseln bzw. bei einer von der 0,1-Folge abweichenden Synchronisierbitfolge mit einer festgelegten Anzahl von Synchronisierbits der Dauer einer Mehrzahl derartiger Synchronisierbitfolgen. Im übrigen können die Zähleranordnungen derart ausgelegt sein, daß für die Ermittlung der Anzahl von Synchronisierbitfolgen lediglich unmittelbar aufeinanderfolgende Synchronisierbitfolgen registriert werden.

Durch die vorstehend erläuterte Vorgehensweise innerhalb der jeweiligen Empfangseinrichtung EE ist sichergestellt, daß trotz des sporadischen Auftretens von der Synchronisierbitfolge entsprechenden Bitmustern in einzelnen Bitspuren die tatsächliche Synchronisierspur erkannt wird.

Es kann jedoch auch der Fall eintreten, daß durch die Auswerteeinrichtung der jeweiligen Empfangseinrichtung EE über eine ggf. oberhalb der Dauer eines der festgelegten Zeitintervalle liegende Zeitspanne hinweg die gleiche Anzahl von Synchronisierbitfolgen in einer Mehrzahl von Bitspuren ermittelt wird. In diesem Falle wird von der Auswerteeinrichtung ein Fehlersignal bereitgestellt, mit welchem ein Synchronisierverlust angezeigt wird. Dieses Fehlersignal wird über das Leitungssystem LTG zu der jeweils anderen Datenübertragungseinrichtung (DUE1 bzw. DUE2) hin übertragen. Auf das Auftreten dieses Fehlersignals hin wird dann durch die Sendeeinrichtung SE dieser Datenübertragungseinrichtung das Einfügen von Datensignalen in die über das Leitungssystem LTG zu übertragenden Bitgruppen unterbrochen und anstelle dieser in die einzelnen Bitspuren ein von der genannten Synchronisierbitfolge abweichende Bitfolge übertragen. Dies kann beispielsweise dadurch erfolgen, daß in sämtlichen, für Datenbits vorgesehenen Bitstellen aufeinanderfolgender Bitgruppen ein festgelegter logischer Pegel "1" oder "0" übertragen wird. Auf das anschließende Auffinden der Synchronisierbitfolge in der tatsächlichen Synchronisierspur durch die Datenübertragungseinrichtung, von der zuvor das Fehlersignal abgegegeben worden ist, wird das Fehlersignal wieder gelöscht und somit nicht mehr zu der anderen Datenübertragungseinrichtung hin übertragen. Auf das Ausbleiben dieses Fehlersignals hin wird dann von der jeweiligen Sendeeinrichtung SE das Einfügen von Datenbits in die Bitgruppen wieder aufgenommen.

Für die gerade erläuterte Steuerung der Unterbrechung der Datensignalübertragung kann in der jeweiligen Sendeeinrichtung SE eine durch das Auftreten des Fehlersignals umsteuerbare Datenweiche vorgesehen sein, welche eingangsseitig einerseits mit den in Bitgruppen einzufügenden Datensignalen und andererseits mit dem festgelegten logischen Pegel beaufschlagt ist.

Das zuvor genannte Fehlersignal wird im übrigen bei dem vorliegenden Ausführungsbeispiel in Form eines aus wenigstens einem Informationsbit gebildeten Informationssignals übertragen, für welches innerhalb der über das Leitungssystem LTG übertragenen Signalströmen nach jeweils einer festgelegten Anzahl von Synchronisierbits bzw. zwischen einer festgelegten Anzahl von Synchronisierbitfolgen eine entsprechende Bitstelle reserviert ist. Diese Bitstelle wird in der den jeweiligen Signalstrom aufnehmenden Datenübertragungseinrichtung gesondert überwacht.

Vorstehend wurde lediglich der Fall betrachtet, daß das aus den Datenübertragungseinrichtungen DUE1 und DUE2 gebildete Übertragungssystem für die Übertragung von Datensignalen dient, die von einer einzigen Datenendeinrichtung her abgegeben bzw. aufgenommen werden.

Das vorstehend erläuterte Verfahren zur Synchronisierung ist jedoch auch für den Fall anwendbar, daß das Übertragungssystem aus miteinander verbundenen Zeitmultiplexeinrichtungen gebildet ist, an welche beispielsweise eine Mehrzahl von Datenendeinrichtungen angeschlossen ist und welche im Zeitmultiplexbetrieb die von den einzelnen Datenendeinrichtungen abgegebenen Datensignale in aufeinanderfolgende Bitgruppen einfügen bzw. die in Bitgruppen enthaltenen Datensignale auf die einzelnen Datenendeinrichtungen verteilen.

Abschließend sei auch noch darauf hingewiesen, daß zwar vorstehend ein Übertragungssystem mit voneinander abgesetzten Datenübertragungseinrichtungen beschrieben worden ist. Die Datenübertragungseinrichtungen können jedoch auch gemeinsame Bestandteile einer Einrichtung sein, in welcher die Datenübertragungseinrichtungen zu synchronisieren sind. Als Beispiel sei hier eine Einrichtung genannt, in welcher zunächst mit Hilfe einer ersten Datenübertragungseinrichtung Bitgruppen gebildet werden, in welche durch eine zweite Datenübertragungseinrichtung beispielsweise zum Zwecke einer Geschwindigkeitsumsetzung zusätzliche Bits zeitgerecht einzufügen sind, und in welcher somit die beiden Datenübertragungseinrichtungen zu synchronisieren sind. In diesem Falle kann das oben erwähnte Fehlersignal alternativ auch über eine gesonderte Steuerleitung zwischen den beiden Datenübertragungseinrichtungen übertragen werden.

## Patentansprüche

1. Verfahren zum Synchronisieren eines Übertragungssystems, in welchem Datensignale zwischen einer Sendeeinrichtung (SE) und einer Empfangseinrichtung (EE) in Form von aufeinanderfolgenden Bitgruppen übertragen werden, wobei die Bitgruppen jeweils aus einer festgelegten Anzahl von Datenbits sowie wenigstens einem Zusatzbit in Form eines zu einer äquidistant verteilten, periodisch wiederholt auftretenden Synchronisierbitfolge gehörenden Synchronisierbits gebildet sind,
**dadurch gekennzeichnet,**
daß in der Empfangseinrichtung (EE) gleichzeitig sämtliche, jeweils durch einander entsprechende Bitstellen aufeinanderfolgender Bitgruppen festgelegten Bitspuren hinsichtlich des Auftretens der Synchronisierbitfolge überwacht werden, daß dabei in periodisch wiederholt auftretenden, festgelegten Zeitintervallen jeweils die Anzahl der in der jeweiligen Bitspur erkannten Synchronisierbitfolgen ermittelt wird
und daß diejenige Bitspur als Synchronisierspur gewertet wird, für welche in dem jeweiligen Zeitintervall die höchste Anzahl von Synchronisierbitfolgen ermittelt worden ist.

2. Verfahren nach Anspruch 1,
**dadurch gekennzeichnet,**
daß in die Ermittlung der Anzahl von Synchronisierbitfolgen lediglich unmittelbar aufeinanderfolgende Synchronisierbitfolgen einbezogen werden.

3. Verfahren nach Anspruch 1 oder 2,
**dadurch gekennzeichnet,**
daß bei Ermittlung der gleichen Anzahl von Synchronisierbitfolgen in einer Mehrzahl von Bitspuren über eine ggf. oberhalb der Dauer eines der festgelegten Zeitintervalle liegende Zeitspanne hinweg zu der Sendeeinrichtung (SE) hin ein Fehlersignal übertragen wird, auf dessen Auftreten hin in der Sendeeinrichtung (SE) die Übertragung von Datensignalen in den für Datenbits vorgesehenen Bitspuren unterbrochen und in diesen jeweils anstelle von Datensignalen ein von der Synchronisierbitfolge abweichendes Bitmuster übertragen wird.

4. Verfahren nach Anspruch 3,
**dadurch gekennzeichnet,**
daß für die Erzeugung eines von der Synchronisierbitfolge abweichenden Bitmusters in den einzelnen Bitspuren in die für die Übertragung von Datensignalen vorgesehenen Bitstellen aufeinanderfolgender Bitgruppen jeweils ein einheitlich festgelegter logischer Pegel übertragen wird.

5. Verfahren nach Anspruch 3 oder 4,
**dadurch gekennzeichnet,**
daß bei einem Übertragungssystem mit untereinander verbundenen, in eine Duplexübertragung von Bitgruppen einbezogenen Sende-/Empfangseinrichtungen das Fehlersignal von der einen Synchronisierverlust feststellenden Sende/Empfangseinrichtung her in Gegenrichtung durch eine festgelegte Codierung eines wenigstens aus einem Informationsbit bestehenden, zwischen aufeinanderfolgende Synchronisierbitfolgen eingefügten Informationssignals übertragen wird.

## Claims

1. Method for synchronization of a transmission system, in which digital signals are transmitted between a transmitting device (SE) and a receiving device (EE) in the form of successive bit groups, in which case the bit groups are each formed from a defined number of data bits as well as at least one additional bit in the form of a synchronization bit, which is part of a synchronization bit sequence which is distributed equidistantly and recurs periodically, characterized in that all the bit tracks which are in each case defined by mutually corresponding bit places in successive bit groups are monitored simultaneously in the receiving device (EE) for the occurrence of the synchronization bit sequence, in that, in the process, the number of synchronization bit sequences identified in the respective bit track is in each case determined at fixed time intervals which recur periodically, and in that the bit track which is assessed as the synchronization track is that bit track for which the highest number of synchronization bit sequences have been determined in the respective time interval.

2. Method according to Claim 1, characterized in that only immediately successive synchronization bit sequences are included in the determination of the number of synchronization bit sequences.

3. Method according to Claim 1 or 2, characterized in that, if the same number of synchronization bit sequences are determined in a plurality of bit tracks over a time span which may be greater than the duration of one of the defined time intervals, an error signal is transmitted to the transmitting device (SE), on whose occurrence the transmission of data signals in the bit tracks provided for databits is interrupted in the transmitting device (SE), and a bit pattern which is not the same as the synchronization bit sequence is in each case transmitted in these bit tracks instead of data signals.

4. Method according to Claim 3, characterized in that, in order to produce a bit pattern which is not the same as the synchronization bit sequence in the individual bit tracks, a logic level which is defined in a standard manner is in each case transmitted in those bit places of successive bit groups which are intended for the transmission of data signals.

5. Method according to Claim 3 or 4, characterized in that, in the case of a transmission system having mutually linked transmitting/receiving devices which are used for duplex transmission of bit groups, the error signal is transmitted from the transmitting/receiving device which detects the loss of synchronization, in the opposite direction, by means of a defined coding of an information signal which comprises at least one information bit and is inserted between successive synchronization bit sequences.

## Revendications

1. Procédé pour la synchronisation d'un système de transmission dans lequel on transmet des signaux de données sous forme de groupes de bits successifs entre un dispositif émetteur (SE) et un dispositif récepteur (EE), les groupes de bits étant formés chacun d'un nombre fixé de bits de données ainsi que d'au moins un bit supplémentaire sous forme de bit de synchronisation appartenant à une séquence de bits de synchronisation répartie à équidistance et revenant périodiquement,
caractérisé par le fait que
dans le dispositif récepteur (EE), on surveille en même temps toutes les pistes de bits, fixées chacune par des positions binaires se correspondant dans des groupes de bits successifs, afin de reconnaître l'arrivée de la séquence de bits de synchronisation, ce faisant, à des intervalles de temps fixés et se répétant périodiquement, on détermine le nombre des séquences de bits de synchronisation reconnues dans chaque piste de bits considérée,
et qu'on évalue comme piste de synchronisation la piste de bits pour laquelle on a déterminé le plus grand nombre de séquences de bits de synchronisation dans l'intervalle de temps considéré.

2. Procédé selon la revendication 1,
caractérisé par le fait que
seules des séquences de bits de synchronisation immédiatement successives sont inclues dans la détermination du nombre de séquences de bits de synchronisation.

3. Procédé selon la revendication 1 ou 2,
caractérisé par le fait que,
lorsqu'on détermine le même nombre de séquences de bits de synchronisation dans plusieurs pistes de bits sur un intervalle de temps, éventuellement supérieur à la durée d'un des intervalles de temps fixés, on transmet au dispositif émetteur (SE) un signal d'erreur à l'arrivée duquel, dans le dispositif émetteur (SE), on interrompt la transmission de signaux de données dans les pistes de bits prévues pour des bits de données et on transmet dans celles-ci, à chaque fois à la place de signaux de données, un modèle binaire différent de la séquence de bits de synchronisation.

4. Procédé selon la revendication 3,
caractérisé par le fait que,
pour produire un modèle binaire différent de la séquence de bits de synchronisation dans les pistes de bits individuelles, on transmet à chaque fois un niveau logique unique fixé dans les positions binaires, prévues pour la transmission de signaux de données, de groupes de bits successifs.

5. Procédé selon la revendication 3 ou 4,
caractérisé par le fait que,
dans le cas d'un système de transmission comportant des dispositifs émetteurs et récepteurs reliés entre eux et inclus dans une transmission en duplex de groupes de bits, on transmet le signal d'erreur depuis le dispositif émetteur et récepteur constatant une perte de synchronisation, dans le sens contraire, au moyen d'un codage fixé d'un signal d'information constitué d'au moins un bit d'information et inséré entre des séquences de bits de synchronisation successives.
